# EUROPEAN PATENT SPECIFICATION

(11) **EP 1 244 076 B1**
(45) Date of publication and mention of the grant of the patent: **11.05.2005**
(21) Application number: 01106915.0
(22) Date of filing: 20.03.2001
(51) Int. Cl.: G07F 7/10

(54) **Control device for automatic vending machine**
Steuergerät für einen Verkaufsautomaten
Dispositif de contrôle pour machine de vente

(43) Date of publication of application: 25.09.2002
(73) Proprietor: FUJI ELECTRIC CO., LTD., Kawasaki-shi, Kanagawa (JP)
(72) Inventor: Yamazaki, Yasuhiro, Oura-Gun, Gunma-Ken (JP)
(74) Representative: Goddar, Heinz J., Dr.

(56) References cited:
- US-A- 4 771 461
- US-A- 4 935 870
- US-A- 5 548 761
- US-A- 6 113 652
- PATENT ABSTRACTS OF JAPAN vol. 1999, no. 05, 31 May 1999 (1999-05-31) & JP 11 045367 A (SANYO ELECTRIC CO LTD), 16 February 1999 (1999-02-16)
- PATENT ABSTRACTS OF JAPAN vol. 2000, no. 14, 5 March 2001 (2001-03-05) & JP 2000 322636 A (SANYO ELECTRIC CO LTD), 24 November 2000 (2000-11-24)
- PATENT ABSTRACTS OF JAPAN vol. 2000, no. 09, 13 October 2000 (2000-10-13) & JP 2000 163636 A (SANYO ELECTRIC CO LTD), 16 June 2000 (2000-06-16)
- PATENT ABSTRACTS OF JAPAN vol. 2000, no. 13, 5 February 2001 (2001-02-05) & JP 2000 293743 A (NIPPON CONLUX CO LTD), 20 October 2000 (2000-10-20)

## Description

### FIELD OF THE INVENTION

The present invention relates to a control device for automatic vending machine comprising terminal control units, each of which controls each unit of automatic vending machine separately, and a main control unit which communicates with the terminal control units and controls them collectively.

### BACKGROUND OF THE INVENTION

In a conventional control device for automatic vending machine, each unit of the automatic vending machine such as a sales control unit which controls a sales product sending mechanism, a coin treating control unit which controls a coin treating mechanism to discriminate a sort of coin, or a display control unit which controls a display of a price display device is separately controlled by each terminal control unit. And, a main control unit controls the terminal control units collectively while it communicates with them through a signal line.

Each of the terminal control units has a control program respectively and carries out predetermined controls. The main control unit has a control program to control each terminal control unit collectively and carries out predetermined control. The control program of the main control unit has a control program corresponding to each of the terminal control unit. Accordingly, if one of the terminal control units is replaced by a new type terminal control unit or if a new type terminal control unit is added, then the control program of the main control unit has to be renewed each time.

As a result, in case that the terminal control unit is replaced or is newly installed in the main control unit of automatic vending machine, a ROM in which a control program is written is replaced by a new ROM or an old program stored in a memory is rewritten to a new program by manual operation each time.

However, there is a problem in conventional control device of automatic vending machine that additional operation is necessary for replacement of the ROM or for rewriting of the memory, where the terminal control unit is replaced or is newly installed. Further, there is another problem that operation error occurs, because such additional operation is carried out by manual operation.

In US 4,935,870 an apparatus for downloading macro programs from videotext is decribed in which still a key has to be pressed. Further in Patent Abstracts of Japan vol. 1999, No. 5, JP 11045367A a controller of an automatic vending machine which has a devided main control program to which subcontrol parts are fitted and in Patent Abstracts of Japan vol. 2000, No. 14, JP 2000 322636 A such a controller with buttons at terminal control parts, which are to be pressed.

In US 5,548,761 a method for compiling for a target machine is disclosed and in US 6,113,652 finally a network and a node apparatus which carry out communication between functional cards and other nodes are described.

All of these documents of the state of the art do not solve the above stated problems created by replacing a terminal control unit.

### SUMMARY OF THE INVENTION

Therefore, it is an object of the invention to solve the problems and to provide a control device of automatic vending machine in which a control program in a main control unit is automatically renewable in case that a terminal control unit is replaced or installed by new one, whereby time and labor for the operation can be reduced and operation errors can be prevented.

The above object of the invention can be attained by a control device for automatic vending machine comprising a plural terminal control units, each of which controls each unit of the automatic vending machine separately, and a main control unit which communicates with the terminal control units and controls them collectively, each of said terminal control unit having an identification code of each manufacturer and a version of control program corresponding thereto, and sending the identification code and the version to the main control unit in initial communication with the main control unit, and the main control unit receiving, based on the identification code of each manufacturer and the version of control program which are received from each of the terminal control unit, the control program corresponding to each terminal control unit connected thereto. According to the first embodiment of the invention, the control program in the main control unit is automatically renewable in case that the terminal control unit is replaced or installed by new one, whereby time and labor for the operation can be reduced and operation error can be prevented.

According to a second embodiment of the invention, the above object can be attained by a control device of automatic vending machine comprising the main control unit inspecting, based on the identification code of each manufacturer and the version of control program which are received from each of the terminal control unit, a ROM installed in the main control unit, a memory card put in an expanding slot, and an inner portion of external memory medium which can communicate in turn, and receiving a suitable control program from one of them. According to the second embodiment of the invention, the main control unit is interlocked with the terminal control unit connected thereto to find the control program thereof automatically and to rewrite it automatically.

According to a third embodiment of the invention, the above object can be attained by a control device of automatic vending machine comprising a main control unit and a program storing unit, said main control unit determining a program area for separate functions and an expanding program area and rewriting a control program partially per the area unit. According to the third embodiment of the invention, rewriting operations are carried out effectively, because an amount of data to be rewritten is less.

According to a fourth embodiment of the invention, the above object can be attained by a control device of automatic vending machine comprising a main control unit and a terminal control unit, said terminal control unit storing a control program of the main control unit to control the terminal control unit, and said main control unit receiving the control program from the terminal control unit in case that the terminal control unit is installed. According to the fourth embodiment of the invention, control or management of the computers becomes easier, because it is not necessary to keep corresponding programs in a memory or memory card of the main control unit or in a management computer.

According to a fifth embodiment of the invention, the above object can be attained by a control device of automatic vending machine comprising a terminal unit in which a control program is stored in the form of an intermediate language, and a main control unit in which an intermediate language interpretation program to convert the control program in the form of an intermediate language into a control program in the form of a mechanical language for the main control unit. According to the fifth embodiment of the invention, even if a microcomputer used in the main control unit is replaced by another microcomputer, the control program in each terminal control unit can be used as it is.

### BRIEF DESCRIPTION OF DRAWINGS

Fig. 1 is a schematic drawing to illustrate a system of control device for automatic vending machine of the invention.
Fig. 2 is a drawing to show a storing state of control program in a memory.
Fig. 3 is a drawing to show a storing state of control program in a memory in case that the control program is partially changed.
Fig. 4 is a drawing to show a storing state of control program in a memory, which includes a program for interpretation of an intermediate code.

### DESCRIPTION OF THE PREFERRED EMBODIMENT

Preferred embodiments of the present invention are described in detail hereinafter with reference to the accompanying drawings.

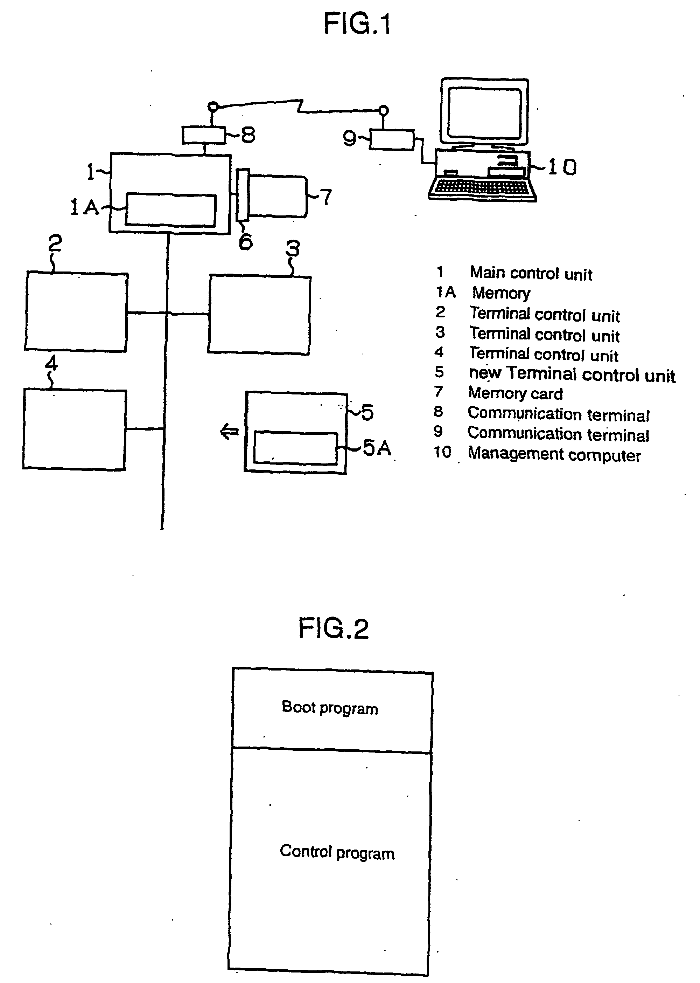

Fig. 1 is a schematic drawing to illustrate a system of control device for automatic vending machine of the invention. A main control unit 1 communicates with terminal control units 2, 3, 4 such as a sales control unit, a coin treating unit or a display control unit, and controls them collectively.

Each terminal control unit 2, 3, 4 has a control program to control a sales product sending mechanism, a coin treating mechanism or a price display device by which a predetermined control is implemented. And, the main control unit 1 has a control program to control the terminal control units 2, 3, 4 collectively by which a predetermined collective control is implemented. Since the main control unit 1 communicates with each terminal control unit 2, 3, 4 by the control program and controls them, contents of the control program are different by manufacturers and types of the terminal control units.

Accordingly, in case that each of the terminal control units is replaced by new one or a new terminal control unit is installed to the terminal control units, the control program of the main control unit has to be rewritten in accordance with the replacement or installation.

The control program of the main control unit 1 is stored in a memory 1A including a EPROM, a flash memory, etc. On the assumption what a kind of terminal control units is incorporated for control operation, a plural of control programs corresponding to a combination of the terminal control units are stored in the memory 1A, in advance. In the control operation, the control program suitable for the terminal control unit which is incorporated in the automatic vending machine is selected from the plural of control programs. When the terminal control units 2, 3, 4 which have been used are replaced by new one or a new terminal control unit 5 is incorporated in the control device of the automatic vending machine to expand functions thereof, the control program is replaced by a control program which is inspected and is suitable for a new combination of the terminal control units. After that, the inspected control program is used for operation.

A manufacturer discriminating code and a version of the control programs corresponding to the manufacturer discriminating code are stored in a non-volatile memory installed in each of the terminal control units 2 to 5. In addition, the manufacturer discriminating code and version of the corresponding terminal control unit are recorded in each control program stored in the memory 1A of the main control unit 1, whereby the control program is discriminated.

The manufacturer discriminating code and the version of the control program are transmitted from each terminal control unit to the main control unit 1, immediately after the electric source is turned on after the terminal control unit is changed. In this case, it is possible that the main control unit 1 requests the communication of the manufacturer discriminating code and the version of the control program and then, each of the terminal control units communicate them to the main control unit 1.

In any case, the main control unit 1 inspects the control program suitable for a combination of the manufacturer discriminating code and version of the control program which are received from each of the terminal control units, and the control program controls the terminal control unit after that.

In case that a new type of terminal control unit of which installation is not assumed is installed as the terminal control unit 5 to expand functions and the control program suitable for the terminal control unit to be newly installed is not stored in the memory 1A, a memory card 7 in which control programs including the control program newly installed for the terminal control unit are stored is inserted in the expanding slot 6 installed in the main control unit 1 to input the suitable control program from the memory card 7. The manufacturer discriminating code and the version are also recorded in the control program stored in the memory card 7.

Also, a communication terminal 8 can be installed in the main control unit 1 to input the suitable control program from a management computer 10 through a communication terminal 9 existing in a control center. In this case, the communication can be carried out through a public telephone line or by wireless. In case that the terminal control unit is newly connected, the main control unit can automatically change a source of receiving the control program, for example, by inspecting presence or absence of suitable control program in the memory 1A at first time, and if it is absent, by inspecting it in the memory card 7, and if it is also absent, then by getting it from the management computer 10 through the communication terminals 8, 9. Thus, at the same time when the terminal control unit is connected to the main control unit, a suitable control program can be automatically inspected and input, whereby operation error can be avoided for rewriting the program.

Further, the control program can be rewritten wholly or in part. In case that it is wholly rewritten, whole areas to store the control program other than the area to store a boot program to rewrite a program by inspecting the manufacturer discriminating code and the version as described above can be rewritten as shown in Fig. 2.

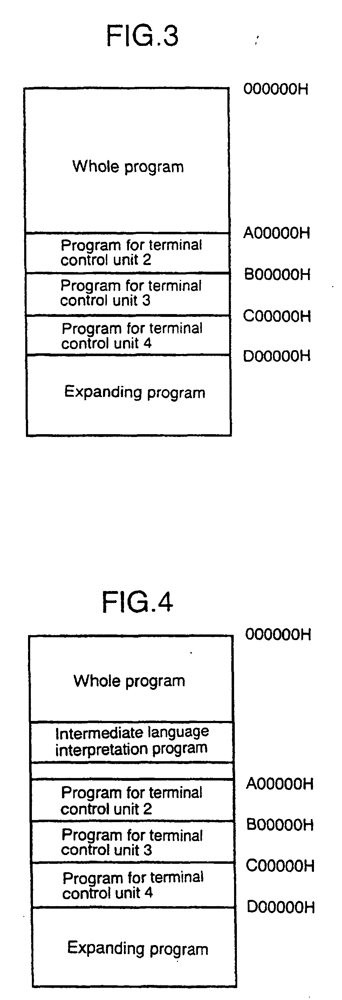

On the other hand, in case that the control programs corresponding to those in the terminal control units replaced or newly installed are rewritten in part, the program storing section of the memory is divided into a program area for separate functions and an expanding program, in advance. Namely, as shown in Fig. 3, areas in which the boot program and the whole program containing portions to carry out whole processing in the control program are stored, areas in which program to control the terminal control units is stored, and areas in which an expanding program to control a new terminal control unit is stored are provided, in advance, and the control programs are partially replaced in every areas.

For example, where the terminal control unit 2 is replaced by new one, whole areas storing the control program for the terminal control unit 2 are replaced by a new program. Also, where a new terminal control unit to expand functions is newly installed, the control program of newly installed terminal control unit is written in the expanding program areas.

A branch instruction goes from the whole program to the control program in each of the terminal control units to implement the whole control. At the time, because there is such the case that the expanding program does not exist, a branch decision means such as control table to indicate whether the order is branched or not is provided.

And, the control program of the main control unit for terminal control unit to be newly installed is stored in the terminal control unit in advance, the control program stored in the terminal control unit can be communicated to the main control unit. According to the way, it is not necessary to accumulate any programs corresponding to the memory 1A in the main control unit 1, the memory card 7 and the management computer 10. As a result, it is easier to manage the programs.

It is more efficient to store each of the programs as described above in mechanical language, but if a microcomputer in the main control unit is replaced by another microcomputer according to some reasons, much time and labor are needed for the replacement because the mechanical language for the control program has to be rewritten to another mechanical language for the new control program. Therefore, an intermediate language interpretation program, which converts the control program in the form of the intermediate program into a mechanical language for the microcomputer of the main control unit, is stored in the main control unit as shown in Fig.4.

In the case, even if the microcomputer of the main control unit 1 is replaced by another microcomputer, the control program in each of the terminal control units can be used as it is.

In the above embodiments, the control program of the main control unit 1 is stored in the memory 1A including a EPROM or a flash memory, and the operation thereof is carried out in the state. The operation can be carried out after the control program is tentatively stored in a flash memory as second memory device and then is transmitted to a SRAM or DRAM. Thus, the operation speed is improved and a storing address of the control program corresponding to each terminal control unit can be widely decided.

According to the control device for automatic vending machine of the invention which has the construction as described above, the following advantages are obtained.

According to the control device for automatic vending machine in the first embodiment of the invention, each of the terminal control unit has the identification code of each manufacturer and the version of control program corresponding thereto, and the main control unit receives, based on the identification code of each manufacturer and the version of control program which are received from each of the terminal control unit, the control program corresponding to each terminal control unit connected thereto. As a result, the control program in the main control unit is automatically renewable in case that the terminal control unit is replaced or installed by new one, whereby time and labor for the operation can be reduced and operation error can be prevented.

According to the control device for automatic vending machine in the second embodiment of the invention, the main control unit inspects, based on the identification code of each manufacturer and the version of control program, the ROM installed in the main control unit, the memory card pun in the expanding slot, and an inner portion of external memory medium capable of communicating, in turn, and receives suitable control program from one of them. As a result, the main control unit is interlocked with the terminal control unit connected thereto to find the control program thereof automatically and to rewrite it automatically.

According to the control device for automatic vending machine in the third embodiment of the invention, the main control unit determines the program area for separate functions and the expanding program area in the program storing section of the main control unit and rewrites the control program partially per the area unit. As a result, rewriting operations are carried out effectively, because the amount of data to be rewritten is less.

According to the control device for automatic vending machine in the fourth embodiment of the invention, the control program of the main control unit is stored in the terminal control unit to control the terminal control unit, and the main control unit receives the control program from the terminal control unit in case that the terminal control unit is installed. As a result, the control or management of the computers becomes easier, because it is not necessary to keep corresponding programs in the memory of the main control unit and in the memory card or management computer to be controlled.

Further, according to the control device for automatic vending machine in the fifth embodiment of the invention, the control program of the main control unit to control the terminal control unit is stored in the form of an intermediate language in the inner portion of the terminal control unit, and the intermediate language interpretation program to convert the control program in the form of the intermediate language into the control program in the form of a mechanical language for the main control unit is stored in the main control unit. As a result, even if the microcomputer used in the main control unit is replaced by another microcomputer, the control program in each terminal control unit can be used as it is.

The features disclosed in the foregoing description, in the claims and/or in the accompanying drawings may, both separately and in any combination thereof, be material for realising the invention in diverse forms thereof.

## Claims

1. A control method of automatic vending machine having a plural terminal control units (2, 3, 4), each of which controls each unit of automatic vending machine separately, and a main control unit (1) which communicates with each of the terminal control units (2, 3, 4) and controls them collectively,
each of said terminal control units (2, 3, 4) having a discriminating code of each manufacturer and a version of control program corresponding to the manufacturer discriminating code, and sending the code and the version to the main control unit in first communication with the main control unit (1),
**characterized in that**
said main control unit (1) inspects
- a ROM (1A) installed in the main control unit (1),
- a memory card (7) inserted in an expanding slot (6) and
- a management computer (10), which is capable of communication in this order, based on the manufacturer discriminating code and the version of the control program received from the terminal control units (2, 3, 4) and/or the manufacturer discriminating code and the version of control program received from a new terminal control unit (5) incorporated in the automatic vending machine to expand functions thereof, and
receives the suitable control program from one of them.

2. The control method of automatic vending machine according to claim 1, wherein the control unit (1) has a program storing section in which a program area for separate functions and an expanding program area are provided, and a control program is partially rewritten per the area.

## Patentansprüche

1. Ein Steuerverfahren für einen Verkaufsautomaten, der mit einer Mehrzahl von Terminal-Steuereinheiten (2, 3, 4) versehen ist, die jeweils eine Einheit der Verkaufsmaschine gesondert steuern, und einer Hauptsteuereinheit (1), die mit jeder der Terminal-Steuereinheiten (2, 3, 4) kommuniziert und diese gemeinsam steuert,
wobei jede der Terminal-Steuereinheiten (2, 3, 4) einen Unterscheidungscode für jeden Hersteller und einer Version des Steuerprogramms, die dem Herstellerunterscheidungscode entspricht, hat, und den Code und die Version zu der Hauptsteuereinheit in einer anfänglichen Kommunikation mit der Hauptsteuereinheit (1) sendet,
**dadurch gekennzeichnet, dass**
die Hauptsteuereinheit (1)
- ein ROM (1A), das in der Hauptsteuereinheit (1) installiert ist,
- eine Speicherkarte (7), die in einen Expanderschlitz (6) eingesetzt ist, und
- einen Verwaltungscomputer (10), der zur Kommunikation in dieser Reihenfolge in der Lage ist, basierend auf dem Herstellerunterscheidungscode und der Version des Steuerprogramms, das von den Terminal-Steuereinheiten (2, 3, 4) aufgenommen worden ist und/oder dem Herstellerunterscheidungscode und der Version des Steuerprogramms, das von einer neuen Terminal-Steuereinheit (5), die in dem Steuerautomaten aufgenommen worden ist, um dessen Funktion zu erweitern, prüft,
und das geeignete Steuerprogramm von einem von diesem aufnimmt.

2. Ein Steuerverfahren für einen Verkaufsautomaten nach Anspruch 1, wobei die Steuereinheit (1) einen Programmspeicherabschnitt hat, in dem ein Programmbereich für gesonderte Funktionen und ein Erweiterungsprogrammbereich vorgesehen sind, und ein Steuerprogramm teilweise über den Bereich neu geschrieben wird.

## Revendications

1. Procédé de commande d'un distributeur automatique ayant plusieurs unités de commande de terminaux (2, 3, 4), dont chacune commande chaque unité de distributeur automatique séparément, et une unité de commande principale (1) qui communique avec chacune des unités de commande de terminaux (2, 3, 4) et les commande collectivement,
chacune desdites unités de commande de terminaux (2, 3, 4) ayant un code de discrimination de chaque fabricant et une version d'un programme de commande correspondant au code de discrimination de fabricant, et l'envoi du code et de la version à l'unité de commande principale dans la première communication avec l'unité de commande principale (1),
**caractérisé en ce que**
ladite unité de commande (1) contrôle
- une mémoire morte (1A) installée dans l'unité de commande principale (1),
- une carte mémoire (7) introduite dans un emplacement d'extension (6) et
- un ordinateur de gestion (10), qui est capable de communication dans cet ordre, sur la base du code de discrimination du fabricant et de la version du programme de commande reçue depuis les unités de commande de terminaux (2, 3, 4) et/ou du code de discrimination de fabricant et de la version du programme de commande reçue depuis une nouvelle unité de commande de terminaux (5) incorporée dans le distributeur automatique pour étendre ses fonctions, et
reçoit le programme de commande approprié depuis l'un de ceux-ci.

2. Procédé de commande d'un distributeur automatique selon la revendication 1, dans lequel l'unité de commande (1) comporte une section de mémorisation de programme dans laquelle une zone de programme pour des fonctions séparées et une zone de programme d'extension sont prévues, et un programme de commande est partiellement réécrit pour la zone.
